# EUROPÄISCHE PATENTSCHRIFT

(11) **EP 1 789 653 B1**
(45) Veröffentlichungstag und Bekanntmachung des Hinweises auf die Patenterteilung: **17.07.2019**
(21) Anmeldenummer: 05779102.2
(22) Anmeldetag: 26.08.2005
(51) Int. Cl.: F01D 5/08, F04D 27/02

(54) **ROTOR FÜR EIN TRIEBWERK**
ROTOR FOR A POWER PLANT
ROTOR POUR UN PROPULSEUR

(30) Priorität: 01.09.2004 DE 102004042295
(43) Veröffentlichungstag der Anmeldung: 30.05.2007
(73) Patentinhaber: MTU Aero Engines AG, 80995 München (DE)
(72) Erfinder: KUTZ, Joachim, 85247 Schwabhausen (DE)
(86) Internationale Anmeldenummer: PCT/DE2005/001500
(87) Internationale Veröffentlichungsnummer: WO 2006/024273

(56) Entgegenhaltungen:
- EP-A2- 0 235 642
- DE-C1- 3 606 597
- US-A- 3 897 168
- US-A1- 2002 182 059
- US-A1- 2003 101 730
- PATENT ABSTRACTS OF JAPAN Bd. 1999, Nr. 10, 31. August 1999 (1999-08-31) -& JP 11 125199 A (MITSUBISHI HEAVY IND LTD), 11. Mai 1999 (1999-05-11)

## Beschreibung

Die vorliegende Erfindung betrifft einen Rotor für ein Triebwerk, insbesondere einen Rotor für einen Verdichter eines Flugtriebwerks oder einer Gasturbine.

Rotoren für Verdichter von Gasturbinen oder Flugzeugtriebwerken sind meist so aufgebaut, dass Luft an dem Verdichter des Triebwerks abgezweigt und möglichst verlustarm nach innen zu einem Verbraucher, insbesondere zur Kühlung, geleitet werden kann. Bei dieser Führung des Kühlluftmassenstroms entstehen bereits beim Abzweigen der Luft aus der Verdichtertrommel und Leitung zu der Scheibennabe, auf der die Verdichterscheiben gelagert sind, erhebliche Druckverluste. Daher wird ein Luftdurchsatz in der Größe, die notwendig ist, um eine ausreichende Kühlung der Turbine erzeugen zu können, nicht ermöglicht.

Damit Luft von der Verdichtertrommel zu der Scheibennabe gelangen kann, sind in der Regel Öffnungen oder Bohrungen an der Außenseite des Rotors vorgesehen. Diese Öffnungen sind beispielsweise an Scheibenflügeln beziehungsweise Flanschen der Scheiben vorgesehen. Über diese Öffnungen kann ein radialer Massenstrom von Verdichterluft aus der Verdichtertrommel in den Rotor, insbesondere zwischen die Scheiben, eintreten. Da durch die Luftführung über eine Bohrung in eine zwischen den Scheiben gebildete Kammer eine Verwirbelung beziehungsweise ein Drall in der Strömung entsteht, kommt es zu Strömungsverlusten. Insbesondere entsteht nach dem Durchströmen der Öffnung ein System aus freiem Wirbel und Ekman-Schichten. Durch diese Strömungsbedingungen kommt es zu einem starken Druckabfall, der ein Erreichen des geforderten Durchsatzes von beispielsweise (0,7-1,5%) unmöglich macht.

Um dieses Strömungsbild und die daraus entstehenden Druckverluste zu vermeiden, werden in einigen Triebwerken Vorrichtungen eingesetzt, die die radiale Strömung führen sollen. Beispielsweise kommen radial gerichtete Rohre zum Einsatz, die auch als "Giggle Tubes" bezeichnet werden. Durch diese Rohre kann ein starrer Wirbel erzwungen werden, durch den lediglich ein niedriger Druckabfall erzeugt wird. Auf diese Weise kann die geforderte Durchflussmenge für die Kühlung zwar erzielt werden, diese Lösung des Stands der Technik weist aber eine Reihe anderer Nachteile auf. Zum einen stellt die Befestigung dieser Tubes ein Problem dar. Weiterhin ist das durch diese Rohre und die Befestigungsvorrichtung für die Rohre erhöhte Gewicht des Rotors nachteilig. Schließlich unterliegen diese Rohre einem Reibungsverschleiß, dem so genannten Fretting, und sind Schwingungen ausgesetzt. Derartige Tube-Type Vortex Reducer sind beispielsweise aus den Dokumenten US 2003/101730 A1 und US 2002/182059 A1 bekannt.

Das Dokument US 3 0897 168 A schützt eine Kühlluftführung, bei der eine Rotorscheibe mit einer zusätzlichen Luftleitscheibe versehen ist. Eine derartige Scheibe (24)wird auch als Guide Disc oder als Cover Plate bezeichnet. An der Rotorscheibe sind strömungsleitende Kanäle (Bleeed Vane 16, Duct 32) vorgesehen. Die Luft tritt zunächst in eine Kammer zwischen der Rotorscheibe und der Luftleitscheibe ein und wird dann durch einen relativ engen Spalt zwischen diesen beiden Bauteilen geführt. Im Spaltbereich ist der Strömungszustand mit den Verhältnissen in Giggle Tubes vergleichbar. Der konstruktive Aufwand und das Zusatzgewicht dieser Lösung sind beachtlich.

Das Dokument JP 11 125 199A (Patent Abstracts of Japan, Bd. Nr. 10, 1999) offenbart eine Kühlluftführung im Bereich von Rotorscheiben, welche eine axiale Luftzufuhr durch die Rotorscheiben, eine radiale Luftführung zwischen den aneinanderliegenden Rotorscheiben und eine axiale Luftabfuhr durch die Rotorscheiben vorzieht. Hier ist mit hohen Strömungsverlusten und einer Lebensdauerreduzierung der Rotorscheiben durch die Scheibenbohrungen in Axialrichtung zu rechnen.

Die EP 0 235 642 A2 zeigt eine Einrichtung zur Belüftung von Rotorbauteilen, wobei die Luft nach der letzten Verdichterstufe im Bereich eines Axialdiffusors entnommen wird. Das Funktionsprinzip ist ähnlich zur bereit genannten JP 11 125 199A.

Aus der DE 36 06 597 C1 ist es bekannt, dass zwischen zwei Rotorscheiben axial verlaufende Verbindungskanäle vorgesehen sind, wobei mehrere Rotorscheiben axial verlaufende Durchgangsbohrungen aufweisen. Die Verbindungskanäle weisen jeweils radiale Fluiddurchlässe auf, die nicht zueinander ausgerichtet sind. Ferner sind auch Eintrittsöffnungen, die in Zwischenringen vorgesehen sind, versetzt zu den Fluiddurchlässen der Verbindungskanäle ausgerichtet.

Aufgabe der vorliegenden Erfindung ist es deshalb, einen Rotor zu schaffen, bei dem ein ausreichender Durchsatz von Luft von der Trommel zur Scheibennabe realisiert werden kann und gleichzeitig die weiteren Probleme des Stands der Technik behoben werden.

Der Erfindung liegt die Erkenntnis zugrunde, dass diese Aufgabe gelöst werden kann, indem ein bei der Leitung von Luft in das Innere des Rotors entstehender Wirbel in mehrere Teilwirbel aufgeteilt wird.

Die Aufgabe wird gelöst durch einen Rotor mit den Merkmalen von Anspruch 1.

Die Aufgabe wird daher gelöst durch einen Rotor für ein Triebwerk, insbesondere ein Flugzeugtriebwerk oder eine Gasturbine, wobei der Rotor zumindest zwei über ein Verbindungselement miteinander verbundene, axial beabstandete Rotorscheiben aufweist. Der Rotor weist mindestens eine Eintrittsöffnung für den Eintritt von Fluid aus dem den Rotor umgebenden Bereich in eine Kammer zwischen den zwei benachbarten Rotorscheiben auf. Erfindungsgemäß ist in der Kammer mindestens ein ringartiges Unterbrechungselement mit mindestens einem loch- bzw. bohrungsartigen Fluiddurchlass angeordnet.

Als Bereich um den Rotor wird erfindungsgemäß der Bereich außerhalb eines Radius bezeichnet, an dem die äußerste Verbindungsstelle zwischen den benachbarten Rotorscheiben vorgesehen ist. Insbesondere stellt dieser Bereich die Verdichtertrommel dar, in der die Schaufeln der Verdichterscheiben laufen und die von dem Verdichtergehäuse umgeben ist.

Durch das Vorsehen eines Unterbrechungselements, das den Luftstrom stört beziehungsweise unterbricht, kann sich ein Wirbel, der sich beim Eintritt durch die Eintrittsöffnung ohne Unterbrechungselement ausbilden würde, nicht voll entfalten. Der Strömungsverlauf wird durch das Passieren des Fluiddurchlasses in dem Unterbrechungselement geändert. Es entstehen beim Vorsehen eines einzigen Unterbrechungselements zwei Teilwirbel, wobei sich einer nach der Eintrittsöffnung und einer nach dem Fluiddurchlass ausbildet. Mit diesem Strömungsbild kann der Druckverlust und damit der Luftdurchsatz zu der Nabe und weiter zu der Turbine optimiert werden.

Erfindungsgemäß ist der Rotor so ausgestaltet, dass durch das mindestens eine Unterbrechungselement mindestens zwei radial benachbarte Kammern gebildet werden, die durch den Fluiddurchlass miteinander verbunden sind.

Als Kammer wird im Sinne dieser Erfindung ein Raum bezeichnet, dessen Abmessung in axialer Richtung des Rotors über zumindest einen Teil der Höhe des Raums größer als die Abmessung der Eintritts- und Austrittsöffnung ist.

Durch diese Ausgestaltung des Rotors kann sich in den einzelnen Kammern ein geeignetes Strömungsbild ausbilden und insgesamt eine Strömung erzielt werden, die zu einem sehr geringen Druckverlust und dadurch zu einem optimalen Durchsatz für Kühlluft führt.

Ist nur ein Unterbrechungselement vorgesehen, so kann sich in der Strömung in der ersten Kammer aufgrund der radialen Begrenzung durch das Unterbrechungselement nur eine geringe Verwirbelung einstellen. Gleiches gilt für die zweite Kammer, die der Nabe des Rotors zugewandt ist.

Der Rotor besteht aus mindestens zwei Rotorscheiben, die über geeignete Verbindungsmittel starr miteinander verbunden sind. Die Verbindung kann beispielsweise durch Schrauben oder Schweißen erzeugt werden.

Die Rotorscheiben werden vorzugsweise so miteinander verbunden, dass zwischen den einzelnen, den Rotor bildenden Rotorscheiben jeweils ein Abstand besteht. In einer Ausführungsform wird das mindestens eine Unterbrechungselement in diesem Zwischenraum zwischen jeweils zwei benachbarten Rotorscheiben vorgesehen und so zwei Kammern in dem Zwischenraum gebildet. Gegenüber der Ausführungsform, bei der das mindestens eine Unterbrechungselement in der Rotorscheibe selbst eingebracht ist und somit die Kammern in der Scheibe gebildet werden, weist diese Ausführungsform den Vorteil einer einfacheren Herstellung auf. Die Scheiben müssen nicht aufwändig durch Hohlgießverfahren hergestellt oder einem aufwändigen Bohrverfahren unterzogen werden.

Das Unterbrechungselement stellt vorzugsweise ein Verbindungselement dar. Hierdurch kann die Stabilität des Rotors weiter gesteigert werden. Zumindest ein Verbindungselement ist zur Herstellung eines Scheibenpakets, das gemeinsam gelagert wird, zwingend vorzusehen. Dieses Verbindungselement stellt beispielsweise einen Scheibenflansch dar. In diesem Verbindungselement kann die Eintrittsöffnung vorgesehen werden. Das Verbindungselement bietet sich hierfür an, da die Wandstärke der Verbindungselemente, wie beispielsweise Scheibenflansche, in der Regel geringer als die Wandstärke der Scheibe ist. Hierdurch ist das Einbringen einer Bohrung oder einer anderen Öffnung in das Verbindungselement einfacher als das Einbringen einer Bohrung durch die Scheibe. Durch Ausgestaltung des Unterbrechungselements als weiteres Verbindungselement kann die Stabilität des Rotorpakets weiter erhöht werden. Ein Einbringen eines Durchlasses in dieses weitere Verbindungselement kann ebenfalls auf einfache Weise durchgeführt werden.

Besonders bevorzugt sind sowohl die Eintrittsöffnung als auch der mindestens eine Durchlass so ausgestaltet, dass diese eine Länge aufweisen, die die Strömung führt. Dies wird insbesondere durch Einbringen der Eintrittsöffnungen in Bauteile geringer Wandstärke erzielt und bringt die strömungstechnisch erforderlichen Bedingungen für die Erzeugung mindestens zweiter Teilwirbel mit geringem Druckverlust.

Die Eintrittsöffnung und der mindestens eine Durchlass sind radial angeordnet. Durch diese Ausrichtung kann sichergestellt werden, dass die Strömung, die beispielsweise in die äußere Kammer gelangt, diese ohne extreme Verwirbelungen wieder verlassen kann. Ferner sind die Eintrittsöffnung und der Durchlass miteinander ausgerichtet. Die Austrittsöffnung der zweiten, inneren Kammer wird durch den Abstand zwischen den benachbarten Scheiben an deren inneren Radius gebildet. Am inneren Radius sind die Scheiben in der Regel verstärkt. Hierdurch wird eine Verjüngung der inneren Kammer an deren Auslass gebildet, über den die Luft aus dieser austritt.

Das Unterbrechungselement und das Verbindungselement, in dem die Eintrittsöffnung vorgesehen ist, sind vorzugsweise integral mit einer der Scheiben ausgestaltet und stellen insbesondere Scheibenflansche beziehungsweise Disk Wings dar. Diese Ausführungsform weist den Vorteil auf, dass die Herstellung der Scheibenpakete vereinfacht werden kann, da ein gesonderter Befestigungsvorgang des Verbindungselements und des Unterbrechungselements an beiden benachbarten Scheiben entfallen kann. Zudem wird die Stabilität durch integrale Ausgestaltung verbessert.

Das Unterbrechungselement wird in einem Bereich vorgesehen, in dem sich aufgrund der Eintrittsöffnung ein System aus freiem Wirbel und Ekman Schichten ergeben würde. Durch Unterbrechung der Strömung in diesem Bereich kann das Strömungsbild insgesamt verbessert werden. Ein sich in der ersten Kammer ausbildender Drall weist eine gewisse Wirbelumfangsgeschwindigkeit auf, die durch das Passieren des Durchlasses zurückgesetzt wird. Ein durch Schräganströmung des Durchlasses auftretender Druckverlust ist im Vergleich zu einem Druckverlust, der sich bei Weiterentfaltung des Wirbels ergeben wird, gering.

Der erfindungsgemäße Rotor wird vorzugsweise in dem Hochdruckverdichter des Triebwerks eingesetzt.

Die Erfindung wird im Folgenden unter Bezugnahme auf die beiliegenden Figuren ausführlich erläutert. Es zeigen:
Figur 1: einen Abschnitt eines Rotors gemäß dem Stand der Technik in einer schematischen Schnittansicht;
Figur 2: einen Abschnitt eines weiteren Rotors gemäß dem Stand der Technik in einer schematischen Schnittansicht; und
Figur 3: einen Abschnitt einer Ausführungsform eines erfindungsgemäßen Rotors.

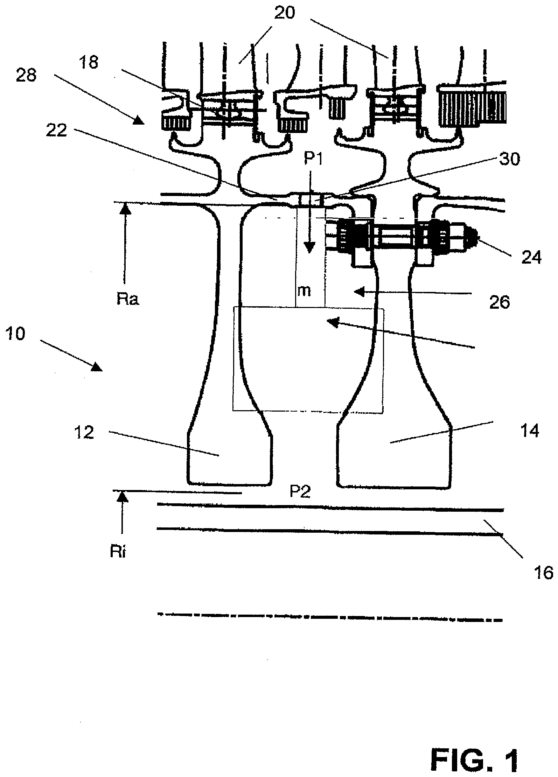

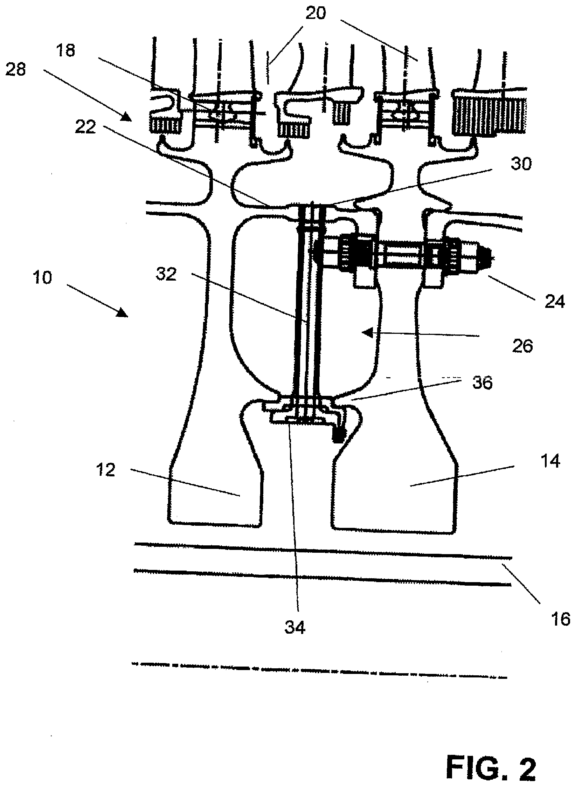

Unter Bezugnahme auf die Figuren 1 und 2 werden im Folgenden die Lösungen und Probleme des Stands der Technik erläutert.

Figur 1 zeigt einen Abschnitt eines Rotors 10. Dargestellt sind zwei Rotorscheiben 12 und 14, in deren Bohrung sich eine Welle 16 befindet. Die Scheiben 12 und 14 weisen an ihrem äußeren Umfang jeweils Nuten auf, in denen jeweils der Fuß 18 einer Schaufel 20 fixiert ist. Die Schaufeln 20 sind in der dargestellten Ausgestaltung Verdichterschaufeln. In der dargestellten Ausführungsform weist die Rotorscheibe 12 Scheibenflansche 22 auf, die sich auf einem Radius Ra in axialer Richtung von der Scheibe 12 erstrecken. Diese Scheibenflansche 22, die auch als Disk Wings bezeichnet werden, sind in einem Abstand zu dem äußeren Umfang der Scheibe 12 vorgesehen. Dies bedeutet, dass die Scheibenflansche auf einem Radius Ra vorgesehen sind, der kleiner als der Radius ist, auf dem die Nuten zur Aufnahme der Schaufelfüße 18 vorgesehen sind. An den freien Enden der Scheibenflansche 22 sind diese mit der weiteren Rotorscheibe 14 verbunden. In der dargestellten Ausgestaltung erfolgt die Verbindung über eine Schraubkonstruktion 24.

Durch die Seitenwände der Scheiben 12 und 14, die Welle 16 und den Scheibenflansch 22 wird eine Kammer 26 gebildet. Als Einlass für Luft aus der Verdichtertrommel 28, in der sich die Schaufeln 20 befinden, ist in dem Scheibenflansch 22 eine Bohrung 30 vorgesehen. Der Auslass der Kammer 26 wird durch den Abstand der beiden Scheiben 12 und 14 im Bereich der Welle 16 gebildet.

Luft, die über die Bohrungen 30, die als Eintrittsöffnungen dienen, in die Kammer 26 eintritt wird, wie in der Zeichnung schematisch durch die Rechtecke angedeutet, ein System aus freiem Wirbel und Ekman-Schichten bilden. Hierbei ist das Verhältnis des Radius Ra auf dem die Schaufelflansche 22 angeordnet sind, zu dem Radius Ri an der Welle 16, an dem die Weiterleitung der Luft zu der Turbine erfolgt, für die Wirbelbildung maßgeblich. Bei gegebenen Randdrücken von P1 in der Verdichtertrommel und P2 an der Welle 16, ist in der Regel bei dem Verhältnis Ra/Ri der erforderliche Durchsatz wegen des starken Druckabfalls im Wirbelsystem nicht erzielbar.

In der Figur 2 ist eine Alternative des Stands der Technik dargestellt. Der Aufbau entspricht im wesentlichen dem des Rotors 10 aus Figur 1. Gleiche Bestandteile werden daher mit gleichen Bezugsziffern, wie in Figur 1 bezeichnet und deren Funktion wird nicht erneut erläutert.

Von der Bohrung 30 an dem Scheibenflansch 22 aus erstreckt sich ein Rohr 32, das im Folgenden auch als Giggle Tube bezeichnet wird, in die Kammer 26. Das der Bohrung 30 gegenüberliegende Ende 34 des Rohres 32 ist an Vorsprüngen 36 an den Seitenwänden der Rotorscheiben 12 und 14 befestigt. Von dem Ende 34 des Rohres 32 aus kann der Luftstrom aus der Verdichtertrommel 28, der durch das Rohr 32 geleitet und durch dieses in einen starren Wirbel gezwungen wurde, in den Bereich zwischen die Rotorscheiben 12 und 14 eingebracht werden. Von dort kann die Luft abgeleitet und einer nachgeschalteten Niederdruckturbine (nicht gezeigt) zur Kühlung zugeführt werden.

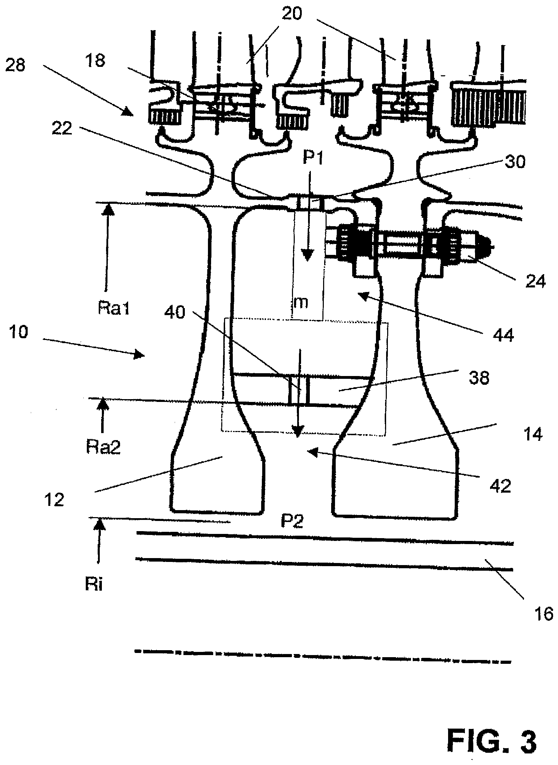

In der Figur 3 ist eine Ausführungsform eines erfindungsgemäßen Rotors dargestellt. Auch hierbei sind Bestandteile, die denen in den Figuren 1 und 2 entsprechen, mit den gleichen Bezugszeichen versehen und deren Aufbau und deren Funktion wird nicht erneut erläutert.

Wie sich der Figur 3 entnehmen lässt, ist bei dem erfindungsgemäßen Rotor 10 in der Kammer 26 ein Unterbrechungselement 38 vorgesehen, das sich axial zwischen den Rotorscheiben 12 und 14 erstreckt. In der dargestellten Ausführungsform ist das Unterbrechungselement 38 an den Seitenwänden der Rotorscheiben 12 und 14 befestigt. In dem Unterbrechungselement 38, das als Ring ausgestaltet ist, der zwischen die Rotorscheiben 12 und 14 eingebracht wird, ist ein Durchlass 40 vorgesehen. Dieser Durchlass 40 kann als Bohrung ausgestaltet sein oder eine Düse darstellen.

Durch das Unterbrechungselement 38 wird die Strömung in der Kammer 26 unterbrochen und es werden zwei radial benachbarte Kammern 42 und 44 gebildet. Die Strömung, die in die Kammer 44 aus der Verdichtertrommel 28 eintritt, wird auch in diesem Rotor einer gewissen Verwirbelung unterliegen. Allerdings wird durch das in der Kammer 26 vorgesehene Unterbrechungselement 38 und den darin vorgesehenen Durchlass 40 die Wirbelumfangsgeschwindigkeit an dieser Stelle zurückgesetzt. Für die Ausbildung von Wirbeln ist bei dem erfindungsgemäßen Rotor das Verhältnis des Radius Ra1, auf dem die Schaufelflansche 22 vorgesehen sind, zu dem Radius Ra2, auf dem das Unterbrechungselement 38 vorgesehen ist, und zu dem Radius Ri an der Nabe maßgeblich. Das aus dem Stand der Technik gegebene Verhältnis von Ra/Ri wird dadurch verringert. Somit wird ein Wirbel, der ohne das Unterbrechungselement 38 entstehen würde, in zwei Teilwirbel aufgeteilt, wodurch sich der Druckverlust verringert.

Die vorliegende Erfindung ist nicht auf die dargestellte Ausführungsform beschränkt. Es liegt beispielsweise im Rahmen der Erfindung, mehr als ein Unterbrechungselement in der Kammer 26 vorzusehen. Auch der Unterschied zwischen dem Radius Ra1 und. Ra2 kann den Anforderungen entsprechend gewählt werden und beispielsweise kleiner als in der Figur 3 angedeutet sein. In diesem Fall wäre das Unterbrechungselement im Vergleich zu der in Figur 3 gezeigten Position weiter in Richtung des Scheibenflügels verschoben angeordnet.

Das Unterbrechungselement wird über den gesamten Umfang des Rotors vorgesehen. Über diesen Umfang wird eine geeignete Anzahl von Fluiddurchlässen, insbesondere entsprechend der Anzahl der Eintrittsöffnungen in dem Scheibenflansch, vorgesehen.

## Patentansprüche

1. Rotor (10) für ein Triebwerk, insbesondere ein Flugzeugtriebwerk oder eine Gasturbine, wobei der Rotor (10) zumindest zwei über ein Verbindungselement (22) miteinander verbundene, axial beabstandete Rotorscheiben (12, 14) aufweist, und wobei das Verbindungselement (22) mehrere Eintrittsöffnungen (30) für den Eintritt von Fluid aus dem den Rotor (10) umgebenden Bereich in eine Kammer (26) zwischen den zwei beabstandeten Rotorscheiben (12, 14) aufweist, wobei die Kammer (26) durch die Seitenwände der Rotorscheiben (12, 14), die Welle (16) und das Verbindungselement (22) begrenzt ist, **dadurch gekennzeichnet, dass** in der Kammer (26) ein ringartiges Unterbrechungselement (38) mit mehreren loch- bzw. bohrungsartigen Fluiddurchlässen (40) angeordnet ist, wobei zwischen den beiden Rotorscheiben (12,14) durch das Unterbrechungselement (38) zwei radial benachbarte Kammern (42, 44) gebildet werden, die durch die Fluiddurchlässe (40) miteinander verbunden sind, und wobei eine jeweilige Eintrittsöffnung (30) und ein jeweiliger Fluiddurchlass (40) in Radialrichtung zueinander ausgerichtet sind.

2. Rotor gemäß Anspruch 1, **dadurch gekennzeichnet, dass** das ringartige Unterbrechungselement (38) ein weiteres Element zum Verbinden der zwei benachbarten Rotorscheiben (12, 14) darstellt.

3. Rotor gemäß Anspruch 1 oder 2, **dadurch gekennzeichnet, dass** die Eintrittsöffnungen (30) und die Fluiddurchlässe (40) in Strömungsrichtung eine Länge aufweisen, die die Strömung führt.

4. Rotor gemäß einem der Ansprüche 1 bis 3, **dadurch gekennzeichnet, dass** das Verbindungselement (22), in dem die Eintrittsöffnungen (30) vorgesehen sind, und das Unterbrechungselement (38) integral mit einer der Scheiben (12, 14) verbunden sind.

5. Rotor gemäß einem der Ansprüche 1 bis 4, **dadurch gekennzeichnet, dass** das Unterbrechungselement (38) in einem Bereich (Ra2) vorgesehen ist, in dem sich ohne das Unterbrechungselement (38) aufgrund der Eintrittsöffnung (30) ein System aus freiem Wirbel und Ekman-Schichten ergeben würde.

6. Rotor gemäß einem der Ansprüche 1 bis 5, **dadurch gekennzeichnet, dass** der Rotor (10) in dem Hochdruckverdichter des Triebwerks eingesetzt wird.

## Claims

1. A rotor (10) for an engine, in particular an aircraft engine or a gas turbine, the rotor (10) comprising at least two axially spaced rotor discs (12, 14), which are interconnected by means of a connecting element (22), and the connecting element (22) comprising a plurality of inlet openings (30) for letting fluid from the region surrounding the rotor (10) into a chamber (26) between the two spaced rotor discs (12, 14), the chamber (26) being delimited by the side walls of the rotor discs (12, 14), the shaft (16) and the connecting element (22), **characterized in that** an annular separating element (38) having a plurality of hole-like fluid passages (40) is arranged in the chamber (26), two radially adjacent chambers (42, 44) being formed between the two rotor discs (12, 14) by means of the separating element (38), which radially adjacent chambers are interconnected by the fluid passages (40), and a respective inlet opening (30) and a respective fluid passage (40) being radially aligned with one another.

2. The rotor according to claim 1, **characterized in that** the annular separation element (38) is an additional element for connecting the two adjacent rotor blades (12, 14).

3. The rotor according to either claim 1 or claim 2, **characterized in that**, in the flow direction, the inlet openings (30) and the fluid passages (40) have a length that guides the flow.

4. The rotor according to any of claims 1 to 3, **characterized in that** the connecting element (22), in which the inlet openings (30) are provided, and the separation element (38) are integrally bonded to one of the discs (12, 14).

5. The rotor according to any of claims 1 to 4, **characterized in that** the separation element (38) is provided in a region (Ra2) in which, without the separation element (38), a system of free vortex and Ekman layers would result on account of the inlet opening (30).

6. The rotor according to any of claims 1 to 5, **characterized in that** the rotor (10) is used in the high-pressure compressor of the engine.

## Revendications

1. Rotor (10) destiné à un propulseur, en particulier un propulseur d'avion ou une turbine à gaz, le rotor (10) comportant au moins deux disques de rotor (12, 14) espacés axialement et reliés entre eux par un élément de raccordement (22), et l'élément de raccordement (22) comportant plusieurs ouvertures d'entrée (30) destinées à l'entrée de fluide depuis la zone entourant le rotor (10) jusque dans une chambre (26) située entre les deux disques de rotor (12, 14) espacés, la chambre (26) étant délimitée par les parois latérales des disques de rotor (12, 14), l'arbre (16) et l'élément de raccordement (22), **caractérisé en ce qu'**un élément d'interruption annulaire (38) comportant plusieurs passages de fluide (40) en forme de trous ou d'orifices est agencé dans la chambre (26), deux chambres (42, 44) radialement voisines étant formées par l'élément d'interruption (38) entre les deux disques de rotor (12, 14), lesquelles chambres sont reliées entre elles par les passages de fluide (40), et une ouverture d'entrée (30) respective et un passage de fluide (40) respectif étant orientés en direction radiale l'un par rapport à l'autre.

2. Rotor selon la revendication 1, **caractérisé en ce que** l'élément d'interruption annulaire (38) constitue un autre élément de raccordement des deux disques de rotor (12, 14) voisins.

3. Rotor selon la revendication 1 ou 2, **caractérisé en ce que** les ouvertures d'entrée (30) et les passages de fluide (40) ont dans la direction d'écoulement une longueur qui guide l'écoulement.

4. Rotor selon l'une des revendications 1 à 3, **caractérisé en ce que** l'élément de raccordement (22), dans lequel sont prévues les ouvertures d'entrée (30), et l'élément d'interruption (38) sont raccordés d'un seul tenant à l'un des disques (12, 14).

5. Rotor selon l'une des revendications 1 à 4, **caractérisé en ce que** l'élément d'interruption (38) est prévu dans une zone (Ra2) dans laquelle, en l'absence de l'élément d'interruption (38), il résulterait un système de vortex libre et de couches d'Ekman en raison de l'ouverture d'entrée (30).

6. Rotor selon l'une des revendications 1 à 5, **caractérisé en ce que** le rotor (10) est utilisé dans le compresseur à haute pression du propulseur.
